# EUROPÄISCHE PATENTANMELDUNG

(11) **EP 2 151 344 A1**
(43) Veröffentlichungstag der Anmeldung: **10.02.2010**
(21) Anmeldenummer: 08013977.7
(22) Anmeldetag: 05.08.2008
(51) Int. Cl.: B60K 6/48, B60W 20/00

(54) **Vorrichtung, Anordnung und Verfahren eines Fahrzeuges und Fahrzeugantriebs**

(71) Anmelder: Boda, Desider, 71101 Schönaich (DE)
(72) Erfinder: Boda, Desider, 71101 Schönaich (DE)

(57) **Zusammenfassung**

Die Erfindung betrifft ein Hybridfahrzeug (1a) mit einem Hybridfahrzeugantrieb (94) der aus einem als Generator betreibbaren Elektromotor (22a) und einem Gasmotor als Verbrennungsmotor (22) besteht, mit geeigneten Verfahren zum betreiben eines solchen Fahrzeugs mit einem solchen Antrieb mit der Anordnung und dem Betrieb von Nebenverbrauchern (150) für das Hybridfahrzeug (1a).

## Beschreibung

### Stand der Technik :

Diesel und Benzinmotorenhybridfahrzeuge werden mit Flüssigkraftstoffmotoren betrieben und erzeugen sehr viel CO2, CO, No x und ein Dieselmotor erzeugt zusätzlich Ruß.
Solche Antriebe werden heute kombiniert mit Elektromotoren betrieben zu sogenannten seriellen , parallelen oder Mischhybridantrieben. Dabei wird ein Elektromotor in gewissen Fahrzeugbetriebsphasen zugeschaltet mit dem Ziel die Abgaswerte zu reduzieren, und mit Benzin oder Dieselmotor was in geringem Maße auch realisierbar ist.
Solche Antriebskombinationen haben den Vorteil, dass bauliche Vereinfachungen wie Reduktion der Motorenzylinderzahl infolge E-Motorenunterstützung möglich ist. Gasmotoren werden mit LPG (Autogas oder CNG ( Hochdrucksystem mit Compressed Natural Gas) betrieben. Gasmotoren haben von Natur aus sehr geringe Abgas Emissionen.
Als Gasmotoren ausgelegte Verbrennungsmotoren zeigen Besonderheiten die von der Kraftstoffstruktur und dessen Zusammensetzung und damit auch von der Oktanzahl bestimmt werden. Diese Motoren haben Vorteile im Bezug auf die Abgasschadstoffbelastung, haben aber im Teillast und Kaltstartverhalten Nachteile. Dies hat Auswirkungen auf den Betrieb eines solchen Motors .

### Aufgabe :

Die Nachteile beim Betrieb eines Gasmotors sind durch eine sinnvolle Umgestaltung eines solchen Antriebes für ein Fahrzeug zu lösen. Der Antrieb soll dabei insbesonders für den Betrieb von Fahrzeugbauarten für Gebiete mit möglichst schadstoffreien Betrieb ausgelegt werden. Dazu gehören beispielsweise auch Verteilerfahrzeuge im städtischen Betrieb. Solche Fahrzeuge sind durch den zusätzlichen Betrieb einer Vielzahl von Nebenverbrauchern gekennzeichnet, wie z.B.: Müllsammelfahrzeug Busse, Kehrmaschinen oder Verteiler Lkw's und PKW's. Fahrzeuge welche im Grubenbetrieb oder zur pflege von Tiefgaragen eingesetzt werden gehören auch zu dieser Kategorie.

### Lösung :

Um den Gasmotor im Teillastbereich insbesonders im kalten Zustand gut betreiben zu können wird der Verbrennungsmotor mit zumindest einem Elektromotor E1 und/oder E2 kombiniert betrieben , der aus einer Batterie mit erhöhter Spannung (> 24Volt) und/oder einem Fahrakku (>40 Volt< 400V) gespeist werden kann.

Die Elektromotoren insbesonders die Elektromotorenstatoren sind dabei vorteilhafterweise Flüssigkeitsgekühlt.

Das Kühlmedium wird hierbei in einem Kreislauf gepumpt, um außerhalb des Elektromotoren Stators an einer Wärmeübertragerfläche die Wärme wieder abgeben zu können . Die Kühlmittelpumpe für die Elektromotoren und/oder den kompletten Verbrennungmotor -Elektromotor-Hybrid-Antrieb also auch unter Berücksichtigung des Kühlkreislaufs für den Verbrennungsmotor kann dabei vorteilhafterweise von einem der Elektromotoren E1 und/oder E2 angetrieben werden. Womit eine Kühlmittelbeförderung auch bei abgestelltem heißen oder gar im fehlerfall überhitztem Verbrennungsmotor noch bei weiterführendem fahren mit einem der Elektromotoren noch möglich ist.

Die Kühlkreisläufe der E-Motoren und der Kühlkreislauf des Gasmotors können hierbei über einen elektrischen Temperaturregler oder einen Thermostaten miteinander verbunden werden. Hierdurch können die zwei Kühlkreisläufe bei z.B.: einem reinen elektrischen Fahrbetrieb bei überschreiten einer vorgegebenen Elektromotorentemperatur miteinander verbunden werden und gegebenenfalls auch der Ventilator der Motorkühlers bei weiterer Temperaturzunahme noch dazu geschaltet werden.

Von Vorteil ist hier auch wenn die Wicklung des E-Motors mit dem Stator verbunden bzw. zugeordnet ist, und der Betrieb der Elektromotoren ohne Kollektor realisiert ist.

Eine mehrphasige, umrichtergesteuerte Stromsteuerung der Elektromotorenwicklungen ist dabei hilfreich.

Der Elektromotorenkühlkreislauf ist vorteilhafterweise mit dem verbrennungsmotorenkühlkreislauf gekoppelt.

Vorteilhafterweise kann auch ein Heizelement am Verbrennungsmotor angeordnet werden um aus der durch die im Schubbetrieb (sogenannte rekuperation ) aufladbaren Fahrzeugakku 53 und oder die Batterie Bauteile des Antriebes insbesonders des Verbrennungsmotors vorzuwärmen um so das Kaltstartverhalten vom Gasmotor und der Antriebskombination zu verbessern.

Zumindest einer dieser Elektromotoren E1 und/oder E2 kann auch als Generator betrieben werden und /oder den Verbrennungsmotor starten. Vorteilhafterweise kann die Heizung des Druckreglers vom Gasmotor dabei die Energie aus einer im vorangegangenen Schiebebetrieb aufgeladene Batterie und oder dem während des Schiebebetriebes geladenen Fahrakkus beziehen.

Die Umgebungstemperatur und die Motortemperatur wird gemessen. So wird bei kaltem Gasmotor der Elektromotor zugeschaltet um ein effizientes Fahren zu ermöglichen

Zumindest einer der Elektromotoren E1/E2 - 22a bzw 113 wird dabei direkt mit einer der Getriebewellen eines Getriebes verbunden sein.

Das Getriebe ist vorteilhafterweise in dessen Übersetzung zwischen der Getriebeeingangswelle 152 und der Getriebausgangswelle 153 veränderlich Diese Übersetzungsverstellung kann stufenlos erfolgen oder es kann unter Zuhilfenahme von elektrischen und oder pneumatischen oder hydraulischen Aktuatoren stufbar ausgeführt werden.

Die Verstellung wird mit sogenannten Getriebestellern GS als Aktuatoren realisiert .

Die Kupplungsbetätigung wird von den Kupplungsstellern KS welche hydraulische elektrische oder pneumatische Zusatzenergie verwenden ausgeführt.

Ein solches Getriebe kann vorteilhafterweise auch als Zweiwellengetriebe ausgeführt sein.

Zweiwellengetriebe haben zwei Schaltwellen wobei jede individuell direkt von der Getriebeeingangswelle oder Kurbelwelle durch eine Mechanische Kupplung trennbar ist.

Hier kann der Elektromotor E1 der Getriebeeingangswelle, einer der Schaltwellen oder der Getriebeausgangswelle zugordnet sein.

Durch die geschickte Anordnung des Elektromotors E1 und oder E2 wird hier außerdem erreicht, dass auch bei stehendem Verbrennungsmotor und oder stehendem Fahrzeug zumindest einen Teil der Nebenverbraucher ohne zusätzliche weitere elektrische Motoren durch den Elektromotor E1 und oder E2 betrieben werden können. Dazu wird die Kupplung K1 ausgekuppelt.

Zu den Nebenverbrauchern gehört beispielsweise eine wegabhängige zapfwellenbetrieb (Nebenverbraucher) , eine Lenkhilfepumpe zur Unterstützung der Lenkung. Eine Vakuumpumpe zu Unterstützung der Bremskraft oder ein Druckluftkompressor zur Unterstützung der Bremskraft oder Luftfederung bzw. zur Bustüröffnung.

Nebenverbraucher müssen bei stehendem Verbrennungsmotor betrieben werden können damit ein Fahrzeug bei elektrischem fahrbetrieb Lenk und Bremsfähig ist. Auch soll ein solches Fahrzeug im elektrischen Fahrbetrieb bei stehendem Verbrennungsmotor noch sicher geparkt und abgestellt werden können.

Bei Zuschalten des Elektromotors reduziert das EEC - Steuergerät die Luftmenge die dem Verbrennungsmotor zugeführt wird. Der Turboladerladedruck wird reduziert wenn der Elektromotor unterstützend eingreift.

Hierzu wird das Bypassventil der Turbine geöffnet, das sogenannte Waste Gate Ventil oder der Leitschaufelwinkel der Turbine angepasst um die Lademenge zu reduzieren.

Zuvor muss dem Verbrennungsmotor der geforderte Betriebsmodus mitgeteilt werden.

Dies geschieht entweder durch Betätigen eines Schalters oder durch eine automatische Kraftstofferkennung durch das EEC Steuergerät.

Dann verwendet das Steuergerät die vorab gespeicherten Parameter Konstanten des elektrischen schreib Lesespeicher des EEC- Steuergerätes für den betrieb der Abgasanlage und/oder der elektrisch gesteuerten Abgasrückführmengenregelung (AGR) Gasbetriebs berücksichtigt. Dies hat den Vorteil dass die Ventile und AGR- Leitungen länger frei von Ablagerungen bleiben.

Das dann entsprechend der Verbrennungsmotorbetriebsweise ausgewählte Parameterset aus dem elektrischen Schreib Lesespeicher welches vom Mikrokontroller des EEC Steuergerätes verwendet wird enthält auch Daten über den zu verwendeten Zündzeitpunkt der Zündkerze bezogen auf den Kurbelwinkel, weitere Parameter welche den Einspritzzeitpunkt und oder die Einspritzmenge des dann ausgewählten Kraftstoffes beeinflussen werden ausgelesen und mitverwendet.

Es kann auch eine dem Fahrbetrieb angepasste Mehrfacheinspritzung oder gar eine Mischeinspritzung aus unterschiedlichen Kraftstoffen von Vorteil sein.

So wird der Reinigungsbetrieb des Rußfilters reduziert, bzw. angepasst indem die SCR Reglung beeinflusst wird, vorteilhafterweise derart, dass die eingeblasene Harnstoffmenge reduziert wird.

Desweiteren kann beim Zuschalten eines der Elektromotoren E1/E2 die zum freibrennen des Rußfilters zugeführte Kraftstoffmenge und/oder der dazu erforderliche Sauerstoff reduziert werden.

Die Lambdaregelung wird derart beeinflusst, dass in Abhängigkeit des gemessenen LambdaSensorwertes und des vorgewählten Kraftstoffes die sauerstoffmenge und die Kraftstoffmenge mit dem gewünschten Verbrennungsmotor verrechnet wird und dann unter Berücksichtigung fester Parameter aus dem elektrischen Schreib Lesespeicher die Kraftstoffmenge angepasst wird.

Wird dessen unterstützendes Drehmoment beim Betrieb aller vorangegangener Verbrennungsmotorregelungen mitberücksichtigt.

Die Abgas und Motorenregelung der Verbrennungsmaschine und der Elektromotoren berücksichtigen auch entsprechend der Kraftstoffvorauswahl und dem Fahrerwunschdrehmoment den beladungszustand des Fahrzeugs und oder die aktuelle Fahrgeschwindigkeit. So wird insbesonders bei kleinen gemessenen Fahrgeschwindigkeiten welche geringer sind wie ein abgespeicherter oder einen über einen Schalter eingegebenen Wert liegt vorzugsweise mit zumindest einem der Elektromotoren gefahren insbesonders hier ist der Vorteil des Elektromotors in Kombination mit einem Gasmotor hervorzuheben da die Zündwilligkeit von Gas geringer wie die von Benzin ist was sich im Teillastbereich des Verbrennungsmotors zeigt. Zumindest eines der vorhandenen Steuergeräte, vorzugsweise die V-ECU kann auch absolute Geschwindigkeiten und auch Geschwindigkeitsgradienten und über einige Minuten Fahrzeit aufnehmen und daraus den Elektromotorenunterstützungsgrad von E1 und/oder E2 vorbestimmen. Es können hiervon auch Fahrstieltrends über eine mittlere Folgezeit z.B.: 5 Minuten oder 10 Minuten abgeleitet werde. Von diesen errechneten und interpolierten fahrstiel wird dann die Hybridsteuerung (Hybridsteuergerät) die Getriebesteuerung ETC und die Verbrennungsmotorensteuerung EEC beeinflußt. So kann das Fahrzeug automatisch einen Stop und Go Betrieb erkennen und dann für eine den weiteren Fahrbetrieb den Verbrennungsmotor abkuppeln und elektrisch fahren oder den Verbrennungsmotor ganz abschalten und elektrisch fahren. Das umschalten kann dann automatisch erfolgen oder dem Fahrer ein Vorschlag zum umschalten in diese betriebsweise gemacht werden. Ist der Fahrakku bis zu einem Mindestladezustand entleert, so schaltet dann der Verbrennungsmotor automatisch ein und lädt den Fahrakku über einen der Elektromotoren vorzugsweise über den Elektromotor welcher direkt oder indirekt von der Kurbelwelle angetrieben wird also E2.

Wird vom Fahrer das maximale Drehmoment verlang zB bei einem Überholvorgang(sogenanntes Boosting), so wird insbesonders bei einem beladenem Fahrzeug zumindest einer der Elektromotoren E1 und /oder E2 zugeschaltet um diesen Vorgang zu beschleunigen dabei ist die Kupplung K1 geschlossen. Vorausgesetzt der gemessene Fahrakkuladezustand zeigt hinreichend Energie um hier unterstützend eingreifen zu können. Die erforderliche Elektromotorenenergie wird aus der dann momentan vorliegenden Verbrennungsmotorenleistung abgeleitet, also der gemessenen Kurbelwellendrehzahl und dem errechneten Verbrennungsmotorendrehmoment.

### Beim B

Der Stop und Go betrieb kann auch über ein externes Signal beispielsweise aus einem Feststehenden Sender oder einem Navigationsgerät zugeschaltet und oder mit optischer oder akustischem Hilfs bzw. Anzeigemittel zum einschalten vorgeschlagen werden.

### Figurenliste:

Figur 1 Fahrzeugarchitektur mit Transportwechselbehälter

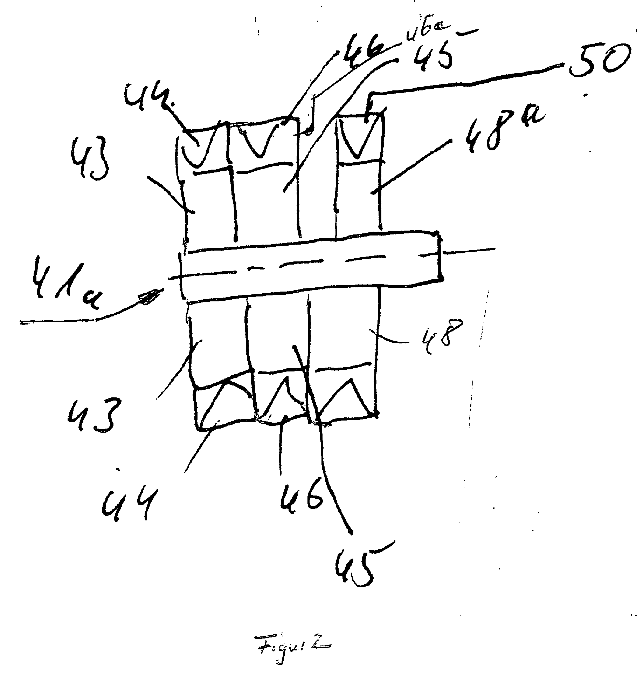

Figur 2 Steckereinrichtung und Diagnoseienheit für Transportwechselträger
Figur 3 Fahrzeugarchitektur mit Steuereinrichtungen
Figur 4 Fahrzeugarchitektur mit Steuereinrichtungen
Figur 5 Fahrzeugantrieb mit Einspritzgasmotor
Figur 6 Fahrzeugantrieb mit Sauggasmotor
Figur 7 Antrieb mit Nebenabtrieb als Schaltgetriebe
Figur 8 Antrieb mit Nebenabtrieb mit stufenloser Übersetzung
Figur 9 Antrieb mit Nebenabtrieb als Doppelkupplungsgetriebe

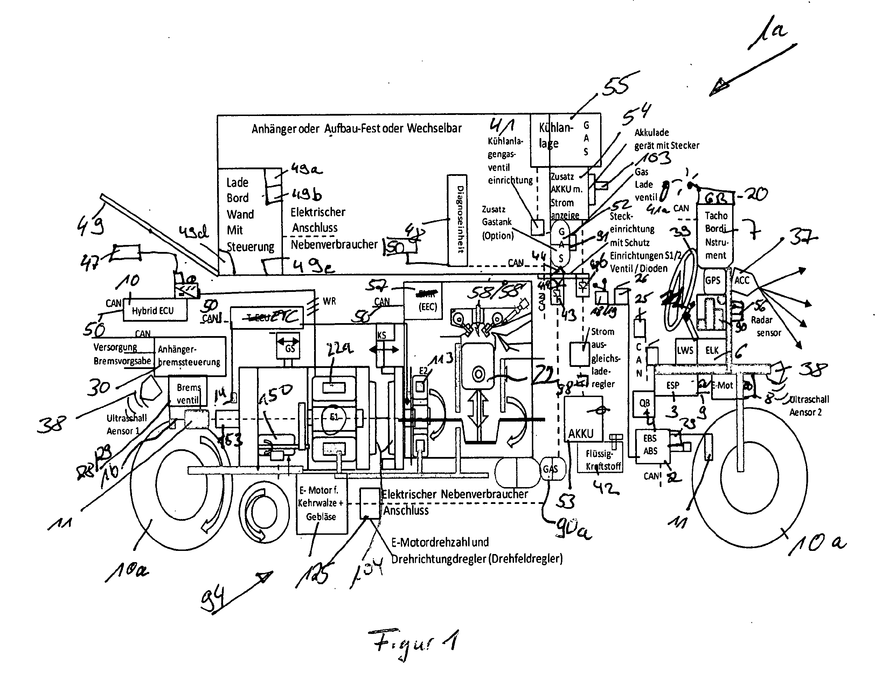

### Beschreibung der Figur 1

Figur 1 zeigt ein Hybridfahrzeug 1 a bestehend aus einem Hybridantrieb welcher aus einer Verbrennungsmaschine einem elektrisch gesteuerten Getriebe mit veränderlicher Übersetzung und einem Elektromotor 22a besteht. Vorteilhafterweise ist hier eine Kupplung zwischen dem Verbrennungsmotor 22 die Verbrennungsmotorenkupplung 104 angeordnet. Betätigt wird diese vom Kupplungssteller KS1 105. Auf der Kurbelwelle befindet sich ein zweiter Elektromotor E2 113. Beide Elektromotoren sind vorzugsweise 2 bis 5 phasige Synchron- oder Asynchronmotoren. Vorteilhafterweise ist zumindest einer der Statoren dieser Elektromotoren an einem Kühlkreislauf angeschlossen. Das Hybridfahrzeug ist mit einem vom Elektromotor E1 antreibbaren Nebenverbraucher 150 z.B.: einer Hydraulikpumpe und / oder Lenkungshydraulikpumpe und/oder einer Kühlwasserpumpe oder einem Bremskraftverstärker (Ölbremsdruckpumpe , Druckluftkompressor oder Vacuumpumpe zur Bremskraftverstärkung) ausgerüstet. Diese Nebenverbraucher können zusätzlich durch elektrische pneumatische oder hydraulische Mittel zu oder abgeschaltet werden. Das Fahrzeug ist hier als Nutzfahrzeug dargestellt mit einem Transportmittelträger 47a welcher ein Transportcontainer z.B.: einer Kehrmaschine sein kann oder ein Kühlkofferaufbau oder ein separater Anhänger darstellen kann.

Desweiteren sind hier dargestellt die Steuergeräte die in einem Verteilerfahrzeug eingebaut werden. So wird das Getriebe über das ETC Steuergerät 1 gesteuert. Die Bremse des Fahrzeuges über das ABS/EBS Steuergerät Die Fahrdynamik wird über das ESP Steuergerät mit Anschluss des Lenkwinkelsensors 5 und Anschluss des Querbeschleunigungssensors 4.

Optional kann ein Lenkungssteuergerät eingebaut werden welches zumindest den Druck oder die Fördermenge der hydraulischen Lenkhilfepumpe steuert. Es ist ein Gangvorwahlgeber 19 ein Handbremsgeber 18 ein Bremspedal 26 optional eine Fahrzeugabstandregelung ACC 37 mit einem Radarsensor 37 ein Gaspedal 23. Desweiteren ist eine Kombifüllstandsanzeige 90 für den Fahrzeugakku 53 und die Kraftstoffe für den Verbrennungsmotor 22 welcher mit flüssigem und/oder gasförmigen Kraftstoff (entspricht dem Aggregatszustand des Kraftstoffes bei atmosphärischem Druck ) desweiteren ist ein Betriebswahlvorgeber 20 dargestellt. Es können auch mehrere Betriebswahlvorgeber 20 21 angeordnet sein. Mit Betriebswahlvorgeber lassen sich die Dauerbremse eines Fahrzeugs betätigen also die Motorbremse des Verbrennungsmotors vorgeben. Dabei wird immer zuerst bei einem noch zuladbaren Fahrakku 53 dieser aufgeladen durch den Generatorbetrieb von zumindest einem der Elektromotoren E1 uns/oder E2.

Reicht das Bremsmoment dieser Stufe von Dauerbremse nicht, so wird zusätzlich die Motorbremse aktiviert indem ein entleeren der verdichteten Luft aus der Brennkammer des Verbrennungsmotors erschwert wird durch verengen des Abgasrohrquerschnittes oder durch Überströmen in eine andere Kolbenkammer . in jedem fall wird mit einem elektrisch betätigbarem Motorbremsaktuator der auszuschiebende Luftstrom beeinflusst. Die Kraftstoffzufuhr aus dem Gasrail und oder die des Flüssigkraftstoffs ist dabei unterbrochen. Im Gasrail wird vorzugsweise der Gasdruck und die Gastemperatur gemessen beide Werte werden von der Gasmotorenregelung zur Regelung der elektrisch gesteuerten Gaseinspritzdüse bzw. des Gaseinspritzventiles , der Zündung und weiterer Motorregelaktuatoren verwendet.

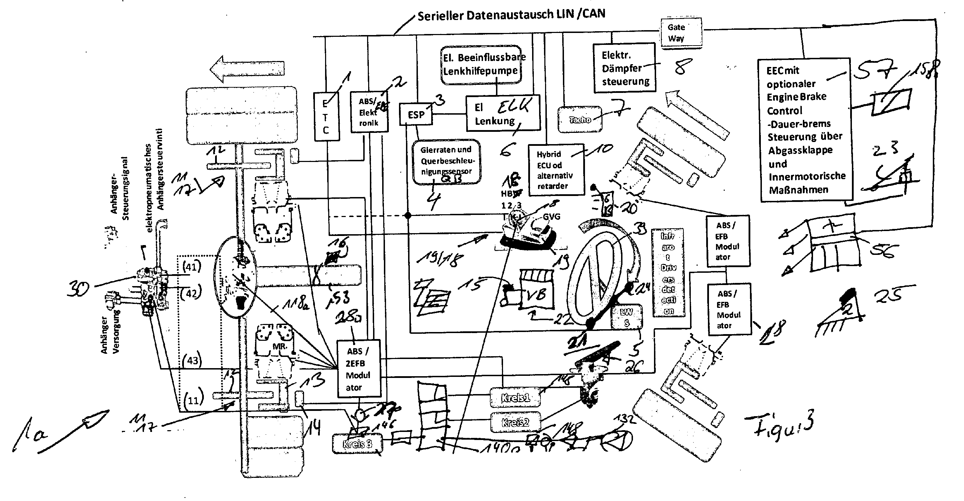

Reicht dieses Dauerbremsmoment noch nicht, so muss der Fahrer das Übersetzungsverhältnis durch betätigen des Gangvorwahlgebers 20 verändern also erhöhen. Reicht dies immer noch nicht, so könnte in einer nächsten Stufe die Betriebsbremse aktiviert werden. Hierbei ist zu beachten dass dies nur bei einer temperaturüberwachten Betriebsbremse sinnvoll ist. Es ist also vorteilhaft wenn die Betriebsbremse bei erreichen einer maximalen zulässigen gemessenen Temperatur wieder öffnet. Es ist auch möglich dass der Einsatz der Betriebsbremse entfällt. für Motorbremszwecke Die Akkustecker zwischen dem Aufbau bzw. des Anhängers und dem Zug Beschreibung der Figur 3

Figur 3 zeigt ein solches Hybridfahrzeug strukturell von oben.
Am Getriebesteuergerät ETC 1 (Elektrische Transmission Control Einheit) ist dabei der Getriebevorwahlgeber GVG 19 angeschlossen bei dessen Betätigung die Getriebeübersetzung unter Berücksichtigung der Fahrdynamischen Fahrzeugzustände verändert werden kann.

Hybridfahrzeuge mit zumindest einem Elektromotor E1 22a und Verbrennungsmotor 22 sind durch deren Einsatz im Verteilerverkehr oder im Stadtverkehr und das dadurch bedingte häufige starten und anhalten vorzugsweise mit eine Elektrisch betätigbaren Feststellbremse auszurüsten. Eine elektrisch ansteuerbare Feststellbremse kann in Abhängigkeit der Fahrzeugsituation automatisch eingelegt und geöffnet werden. Bei schwereren Fahrzeugen wird die Feststellbremse EFB dann pneumatisch durch das Entlüften der Federspeicherzylinder geschlossen dies geschieht durch entsprechende elektrische Vorsteuerung eines EFB Modulators. Dabei kann ein Teil der Feststellbremselektronik zumindest die Leistungshalbleiter im Feststellbremsmodulator untergebracht sein. Desweiteren ist es Vorteilhaft zumindest das Festellbremssteuergerät von der Batterie und dem Fahrakku zu versorgen. Damit kann ein lösen der Feststellbremse auch noch bei ausgefallener Batterie durch den Fahrakku ermöglicht werden.

Am Getriebevorwahlgeber ist zur manuellen Betätigung der elektrischen Feststellbremse ein Mehrstufendrehschalter 18 mit zumindest 3 Schaltpositionen für die Betätigung der elektrischen Handbremse integriert. Der Handbremsgeber ist mit dem ESP Steuergerät 3 oder einem Bremssteuergerät 2 verbunden. Durch Drehen wird dabei entsprechend der Drehwinkelvorgabe die Feststellbremse stufbar geschlossen, bzw. durch drehen in Position 1 wieder geöffnet. Eine Feder versucht dann den Drehschalter von der Schließposition 2 in die Öffenposition 1 zurückzudrehen.
Erreicht der Drehschalter 18 die Schließposition 2 wird diese automatisch gegen das selbstständige zurückdrehen verriegelt und die Feststellbremse wird geschlossen.
Er kann aber noch weitergedreht werden um die Anhängerfeststellbremse kurzzeitig zu lösen, damit der Fahrer prüfen kann ob das Träger- oder Zugfahrzeug auch bei Druckverlust der Anhängerbremse noch sicher geparkt ist. Durch Betätigen eines weiteren Aktuators und oder zusätzliche Bewegung am Drehknopf kann die Feststellbremse dann gelöst werden. Z.B.: durch das kurzzeitige Weiterdrehen des Drehschalters über die Testposition 3 hinaus.
Die Feststellbremse der kompletten Zuges wird durch den elektromotorbetrieb des Hybridfahrzeuges beeinflusst so zB beim Anfahren des Fahrzeuges Berg. Hier wird eine Art Hillholder Funktion aktiviert dass es einem Kühltransportfahrzeug z.B.: ermöglicht daß das Drehmoment des Elektromotors mit dem Drehmoment des Verbrennungsmotor so anzupasst wird daß die Feststellbremse stufbar entsprechend dem vorhandenem Antriebsmoment anzupassen . Insbesonders bei noch kaltem Verbrennungsmotor, was dem EEC Steuergerät durch eine Temperaturmessung bekannt ist, wird das Hauptdrehmoment zum wegfahren aus einer der elektrischen Antriebsmaschinen verlangt indem dort der elektrische Drehfeldregler die Wicklungen stärker bestromt werden. Zumindest eine der elektrischen E1/E2 Maschinen hat zuvor den Verbrennungsmotor gestartet bei unterbrochenem Triebstrang gestartet. Ein Zurückrollen wird durch Drehzahlsensoren 16 und oder 14 kontrolliert. Also öffnet die Feststellbremse graduell so stark wie der Hybridantrieb unter Berücksichtigung der Betriebsparameter beider Antriebsmaschinen auch ein Anfahrmoment entgegensetzen bzw. aufbauen kann. Der Fahrer kann dabei die Feststellbremse schlagartig öffnen das Fahrzeug wird nicht zurückrollen da die Feststellbremszylinder aus eben diesen gründen langsam und graduell belüftet werden. Mitberücksichtigt wird dabei als Vorgabe ist die Gaspedalstellung und die Geschwindigkeit mit der das Gaspedal gedrückt wird mit diesen werten beschreibt der Fahrer die Geschwindigkeit mit der er die Parklücke verlassen will.
Das Anhalten und Abstellen des Fahrzeugs bei einem rein elektromotorischen Betrieb funktioniert derart dass bei schneller Bremspedalbetätigung der Elektromotor abgeschaltet wird bzw. unter Berücksichtigung einer abgespeicherten Löschzeit sofern das Fahrzeug noch rollt sogar umgepolt wird (dies ist wiederum abhängig von der Motorinduktivität und der Drehzahl des Elektromotors E1) und dem eingelegten Gang also dem Übersetzungsverhältnis.
Kommt das Fahrzeug so zum stehen und wird nun zusätzlich der Zündschlüssel abgezogen, so wird der Elektromotor abgeschaltet, auch der Fahrakku 53 wird durch dass Akkuabschaltrelais 98 abgetrennt und die Feststellbremse also Handbremse wird für den ganzen Zug eingelegt, auch wenn der Handbremshebel nicht betätigt wird.
Desweiteren ist ein elektrische Lenkungssteuergerät 6 dargestellt, welches die Messwerte des Lenkwinkelsensors 5 direkt oder indirekt vom ESP Steuergerät 3 erhält. Auch das elektrische Lenkungssteuergerät 6 hat wie alle dargestellten Steuergräte eine serielle Datenschnittstelle.
Das Lenkungssteuergerät steuert dabei vorteilhafterweise die Lenkungspumpe derart, dass bei zunehmender Geschwindigkeit verhältnismäßig weniger Öldruck - und oder Ölvolumen zur Verfügung steht um somit einen fahrgeschwindigkeitsanhängigen Effekt zu realisieren. Hierzu wird ein elektromagnetischer Aktuator vom Lenkungssteuergerät 6 betätigt der den Förderstrom beeinflusst und/oder einen Bypass in den Ölrücklauf aufmacht. Bei abrupter unzulässiger Lenkbewegung die nicht dem Fahrprofil entspricht, kann das Steuergerät auch die Leistung der Lenkungsunterstützung zurücknehmen.
Es könnte auch vorteilhaft sein, daß das Steuerrad zumindest kurzzeitig durch einen zusätzlichen elektrischen, hydraulischen oder pneumatischen Aktuator der federrückgestellt ist die Lenksäule festhält und dabei den Fahrer akustisch oder optisch warnt.
Die Lenkungssteuerung kann im falle so ein fall vorliegt auch einen Bremsbefehl an die Betriebbremse vorgeben um ein sequentielles Einbremsen zumindest eines der Räder zu verlangen um z.B.: unter Berücksichtigung vom nachlauf und Radsturz ein Rückstellmoment entgegen der unerlaubten Lenkbewegung zu realisieren.

Ein Tachograf 7 misst an der getriebeausgangswelle die Drehzahl und ermittelt daraus die aktuelle Fahrzeuggeschwindigkeit. Desweiteren ist eine ABS Steuerelektronik 2 dargestellt welche die Raddrehzahlverzögerung mit dem Raddrehzahlsensor 14 misst und entsprechend dem Signal die ABS oder EBS Modulationsventile 28, 28a ansteuert bei einer verlangten Bremsung. Der Kombimodulator 28a hat außer ABS/EBS Bremsaufgaben auch noch Feststellbremsbetätigungsaufgaben mit einem hierfür integrierten Feststellbremsmodulator wahrzunehmen. Zur Betätigung der Feststellbremse hat dieser Modulator einen zusätzlichen Druckmittelanschluss der durch ein Rückschlagventil von der Betriebsbremsdruckmittelversorgung abgesichert ist. Außerdem ist ein Drucksensor dort integriert der den Druck am Feststellbremsmodulationsausgang also der Druck des Feststellbremzylinders mißt. Desweiteren hat der Feststellbremsdruckmodulator einen Anschluss zum Anhängersteuerventil oder Modul mit welchem die Feststellbremse des Anhängers gesteuert wird.
Desweiteren ist ein Motorsteuergerät 57 dargestellt, welches den elektrischen Messwert des Gaspedales 23 als Fahrerwunschvorgabe erhält. Das Motorsteuergerät 57 steuert die Kraftstoffeinspritzventile entsprechend der Fahrervorgabe.
Es ist ein Bremspedal 26 zur Steuerung der Betriebsbremse dargestellt das hier einen zusätzlichen elektrischen Sensor zur Weitergabe des Messwertes an die ABS/EBS Elektronik ermöglicht.
Das hier dargestellte Bremspedal 26 hat weitere Druckmittelanschlüsse zum direkten betätigen der Aktuatoren der Radbremse 11.

Die Klimaanlage 56 mit dem Kompressor ist elektrisch gesteuert und hat eine serielle Datenschnittstelle.

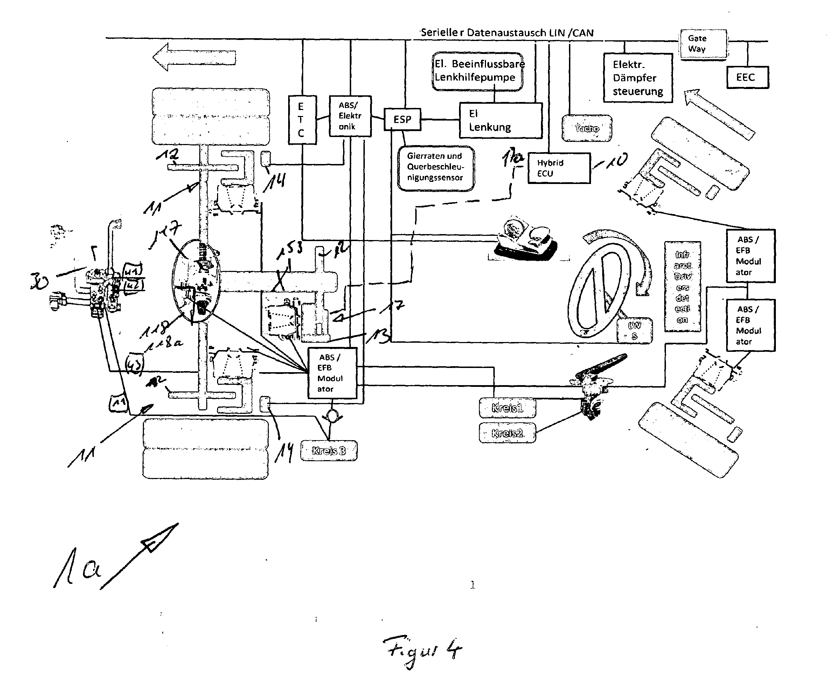

### Beschreibung der Figur 4

Figur 4 zeigt eine Fahrzeugbauart des Hybridfahrzeugs bei welcher an der Getriebeausgangswelle der Feststellbremsaktuator angeordnet ist und dieser Stellbefehle über die elektrisch Leitung 17a vom Hybridsteuergerät 10 erhält von beiden elektrischen Energiequellen 47 und 53 versorgt wird.
Der Feststellbremsaktuator 13 kann auch hier elektrisch, hydraulisch oder pneumatisch geöffnet werden. Zugespannt wird der Bremssattel 13 über ein federndes Element.
Desweiteren ist eine Differential 117 gezeigt mit einer Differentialsperre 118 Die Differentialsperre 118 wird über eine Leitung 118 a gesteuert. Diese Leitung kann eine hydraulische, pneumatische oder elektrische Leitung sein.
Die Differentialsperre wird vorzugsweise dann bei stehendem oder noch langsam rollenden Fahrzeug eingelegt wenn die Feststellbremse geschlossen also eingelegt wird.
Das Anhängersteuerventil 30 wird durch den Steueranschluss (43) entsprechend derart mit betätigt, dass dieser Anschluss des Anhängersteuerventiles beim abstellen des Fahrzeugs entlüftet wird. Für die Anhängertestfunktion also beim kurzzeitigen drehen des Feststellbremsschalters 18 in die Position 3 wird diese Leitung belüftet.

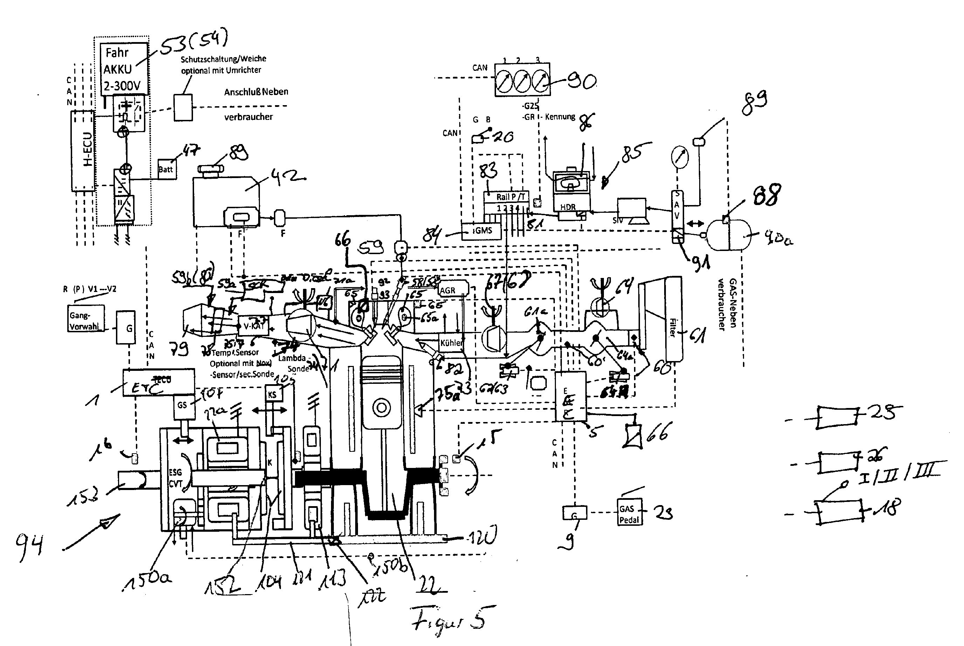

### Beschreibung der Figur 5

Figur 5 zeigt einen Hybridantrieb 94 mit einem Elektromotor 22a in Kombination mit einem Verbrennungsmotor 22 der als Gasmotor betrieben werden kann. Der Hybridantrieb hat einen zumindest einen Nebenabtrieb 150a der vom Elektromotor 22a antreibbar ist auch dann wenn der Verbrennungsmotor 22 abgeschaltet ist, und das Fahrzeug steht. Die Verbrennungsmotorenkupplung 104 ist dabei geöffnet.
Der Getriebesteller 107 öffnet den Triebstrang durch Einschalten eines Leerlaufes derart, dass die Getriebeausgangswelle 153 stehen bleibt.
Der Elektromotor 22 a kann also den Nebenverbraucher 150 a antreiben Symbolhaft sind die Kühlkreisläufe der Elektromotoren 121 und des Verbrennungsmotors 120 mit dem Thermostaten 122 dargestellt.
Für den Betrieb des Gasmotors 22 ist ein Gastank 90a angeordnet.
Dem Gastank kann ein Drucksensor 88 der zu Füllstandsanzeige dient zugeordnet sein.
Am Gastank oder in dessen Nähe angebracht ist ein Gastankabsperrventil 91 das elektrisch betätigt wird und im stromlosen Fall schließt. Dieses Ventil kann redundant aus dem Fahrakku 53 und der Batterie 47 versorgt werden. Im Falle vom Gasbetrieb auf Elektrohybridantrieb geschaltet wird dieses Tankabsperrventil 91 geschlossen. Gesteuert wird das Tankabsperrventil vom Gasmotorensteuergerät GMS 84. Dem Einfüllstutzen 89 für das Gas ist ein Füllventil (SAV) zugeordnet das ein entweichen des Gases nach der Befüllung des Tankes 90a verhindert.
Zusätzlich kann am Tankeinfüllstutzenventil in Richtung des Gastanks nachgeschaltet ein Manometer zur Füllstandsanzeige angeordnet sein. Zwischen dem Gastanksperrventil und dem Gasdruckregler HDR 85 kann ein Sicherheitsventil SIV angeordnet sein dass bei Verbrennungsrückstößen aus der Vorkammer des Ansaugtraktes manuell schließt.

Der Gasdruckregler 85 hat die Aufgabe den Gasdruck von dem hohen Tankdruck auf einen niedrigeren Gasdruck zu reduzieren. Dabei nimmt die Gasströmungsgeschwindigkeit zu und das gas wird kalt. Deshalb eine eine Heizung eingebaut um den Druckregler mit dem Kühlwasser des Verbrennungsmotors und /oder vorzugsweise der Elektromotoren zu heizen, da diese in der Startphase den Antrieb des Fahrzeugs übernehmen geben Sie zuerst wärme ab und können somit auch dieses Motorenbauteil vorwärmen. Eine weitere mögliche sinnvolle Anordnung ist die elektrische Vorheizung der Gasdruckreglers aus dem Fahrakku oder einer Batterie welche vom Fahrakku 53 nachgespeist wird.
Es ist eine Kombifüllstandsanzeige 90 angeordnet welche von allen Kraftstoffen, dem Gaskraftstoff, dem Flüssigkraftstoff, sofern der Motor für Mischbetrieb ausgelegt ist, und dem Fahrakku 53 (54) den Ladezustand anzeigt. Diese Daten können von zumindest einem weiteren Steuergerät welches eine Füllstands- und streckenabhängige Antriebsauswahl trifft optional zusammen mit den Navigationsdaten eines Navigationsinstrumentes verwendet werden.
Der Gaskraftstoff wird in einer Gasrail verteilt, von dort steht der Gasdruck an Gaseinspritzventilen 82 an. Jeder Zylinder des Verbrennungsmotors hat ein eigenes elektrisch betätigbares Gaseinspritzventil 82. Die elektrische Versorgung des elektrischen betätigbaren Einspritzventile kann auch zumindest indirekt aus dem Fahrakku 53 realisiert werden.
Gesteuert werden die Einspritzventile von der Steuerelektronik 84 , welche in Abhängigkeit des Antriebsmomentes des Elektromotors E1/E2 und/oder des Betriebswahlschalters 20 des Hybridfahrzeuges den Einspritzzeitunkt und die Gaseinspritzmenge der elektrischen Gaseinspritzventile 82 anpasst. Der Einspritzzeitpunkt ist außerdem von dem Messwert des Motordrehzahlsensors 15 abhängig sein.

Weitere Einflussgrößen auf das Einspritzverhalten des Gasmotorsteuergerätes GMS 84 sind der Messwert der Lambdasonde 74 nach dem Katalysator.
Desweiteren kann die Drosselklappenstellung 64a und der Messwert des Nockenwellengebers 65 mitberücksichtigt werden.
Dabei ist zu berücksichtigen dass ein elektromagnetischer Nockenwellensteller 66 den Ventilhub und/oder die Nockenwinkelzuordnung zum Kurbelwinkel der Kolbenmaschine abhängig von Stellung des Betriebswahlschalters 20 bzw. 21 vorteilhafterweise verändern kann. Somit ist eine ideale Anpassung der Verbrennungsmaschine 22 an die automatisch und /oder manuell gewählte Betriebsart des Hybridantriebs möglich.

Es können auch mehrere Nockenwellensteller 66 den Einlaß- und Auslaßventilen zugeordnet werden, damit das Betriebsverhalten beider Ventilkategorien beeinflussbar ist.
In Figur 5 zusätzlich dargestellt ist eine einstufige Abgasturboladersteuerung. Für Gasmotoren ist eine etwas höhere Verdichtung als bei Benzinmotoren hilfreich womit auch hier ein anpassen des Ladedruckes an das in Abhängigkeit der Geberstellungen 20 bzw 21 hilfreich ist. Auch hier spielt die Motorentemperatur gemessen durch den Sensor 75a eine Ladedruckbeeinflussende Rolle.
So wird in Abhängigkeit der gewählten Antriebsquellen bzw. Resourcen (Fahrakku, Gas und/oder Flüssigkraftstoff) auch im überlagernden Betrieb mit dem Elektromotor E1 22a bzw. E2 113, der Turboladerdruck durch verändern des Leitrad- oder des Schaufelwinkel an der Turbine 71 oder durch ein beeinflussen des Waste Gate Ventils, einem Turbinenbypassventil, welches die durch die Turbine strömende Abgasmenge steuert, beeinflusst.

Das Waste Gate Ventil und die Lambdasonde sind am Motorsteuergerät EEC 5 angeschlossen. Welches über eine serielle Kommunikationsleitung mit dem Gassteuergerät 84 in Verbindung steht um die Daten zu übermitteln.
Das EEC Steuergerät steuert zusätzlich die Einspritzdüsen 58 für den Flüssigkraftstoff und den Zündwinkel und den Zünddauer der Zündkerze 92. Durch Berücksichtigung dieser Regelmöglichkeiten löst eine Leistungssteigerung des Antriebs möglich.
Im falle ein Dreiwegekatalysator eingesetzt wird auch dessen Verhalten insbesonders die Luftzufuhr von der Stellung des Betriebsvorwahlgebers 20 und/oder dem Motorbremsgeber 21 beeinflussbar.
Im Falle als Flüssigkraftstoff ein Dieselkraftstoff eingesetzt wird, muss der Ladedruck des Turboladers beim umschalten auf den Gasbetrieb zumindest im Vollastbereich abgesenkt werden und es muss zumindest bei niedrigen Drehzahlen und/oder kaltem Motor zusätzlich Diesel eingespritzt werden. Zum Starten des Verbrennungsmotors 20 als Dieselmotor kann die Glühkerze auch aus dem Fahrakku 53 nachversorgt werden.
Bei entsprechender Anpassung des Verdichtungsraumes derart dass eine gute Gemischbildung möglich ist auch eine Ausführung denkbar bei welcher das Gas direkt in den Verdichtungsraum des Verbrennungsmotors eingespritzt wird. Es ist dann denkbar dass bei zweistoffbetrieb des Gasmotors mit einem Flüssigkraftstoff eine Doppeleinspritzdüse mit einem Versorgungsanschluss für Gas und Flüssigkraftstoff eingebaut wird. Bei einem solchen Direkteinspritzen des Gases in den Brennraum muss der Ladedruck und oder die einlass bzw. die Auslassventile im Hub und Offnungszeitpunkt angepasst werden., um die Zündwilligkeit des Gemisches zu berücksichtigen.

Dieselmotoren werden bekanntlich mit einem Rußfilter 79 betrieben Diese Rußfilter 79 müssen durch einblasen von Harnstoff SCR 59a oder durch ein Nachbrennen mit einem Kraftstoff/Luft- Gemisch gereinigt werden.
Beide Russfilterreinigungsarten werden in Abhängigkeit des Betriebsartwahlschalters 20 und des Dauerbremsschalters 21 beeinflusst bzw. abgeschaltet, da im Betriebsmodus Gashybridbetrieb sehr wenig Partikel im Abgas erzeugt werden .
Eine typische Situation ist z.B.: ein stationärer Betrieb des Fahrzeugs bei geöffneter Verbrennungsmotorenkupplung z.B.: in einem Hebebühnenbetrieb oder Kranbetrieb.
Bei geöffnetem Triebstrang wird Hydraulikpumpe der Hebebühne wird dabei vom Elektromotor 22a über den Nebenabtrieb angetrieben. Der Fahrakku 53 wird mit dem Gasmotor der fast keine Emissionen erzeugt nachgeladen. Die Feststellbremse ist aus Sicherheitsgründen zuvor vorzugsweise automatisch eingelegt worden.
Beim Ausfall einer der Komponenten des Verbrennungmotors 22 , insbesonders der Komponenten welche für den gasmotorbetrieb erforderlich sind z.B.: Gaseinspritzventile 82 oder den Druckregler 85 kann das Fahrzeug automatisch auf den Elektromotorbetrieb und/oder den Flüssigkraftstoffbetrieb umgestellt werden.

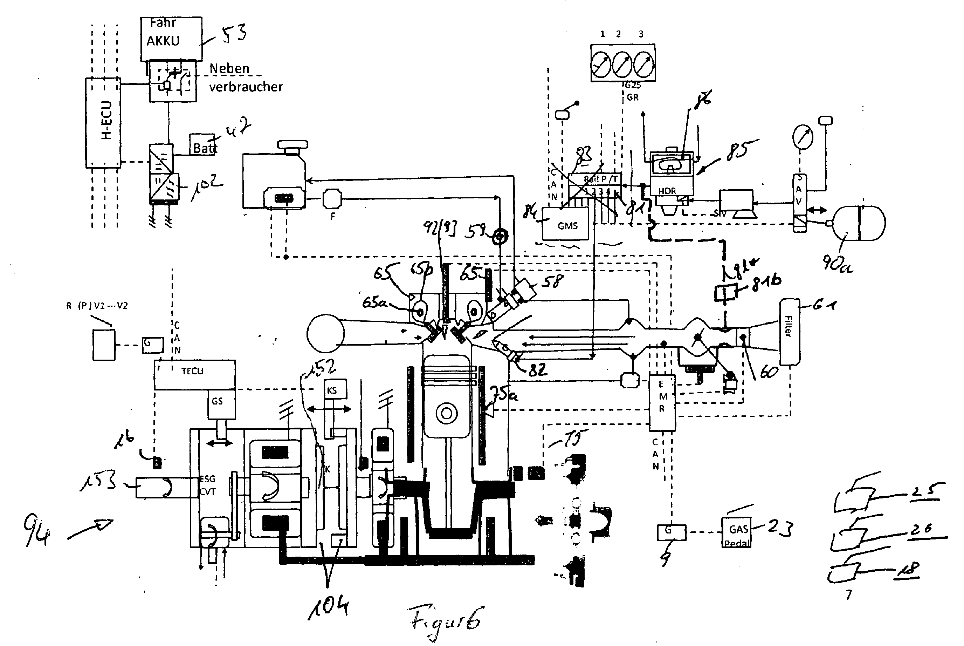

### Beschreibung der Figur 6

Figur 6 zeigt eine Antriebskombination mit einem Saugmotor des als Gasmotor betrieben werden kann. Hierbei kann der Gaskraftstoff direkt aus dem Druckregler 85 über die Venturigasleitung 81a in den gemeinsamen Ansaugtrakt geführt werden. In der Gasleitung 81a ist vor der Venturidüse 81c ein elektrisch betätigbarer Gasmengenregler 81 b angeordnet.
Der Gasmengenregler 81b ist dabei vorteilhafterweise aus einem Fahrakku 53 nachversorgbar und je nach der gewählten Betriebsart durch den Betriebsvorwahlgeber 20 und/oder Motorbremsgeber 21 wird die Gasmenge beeinflusst.

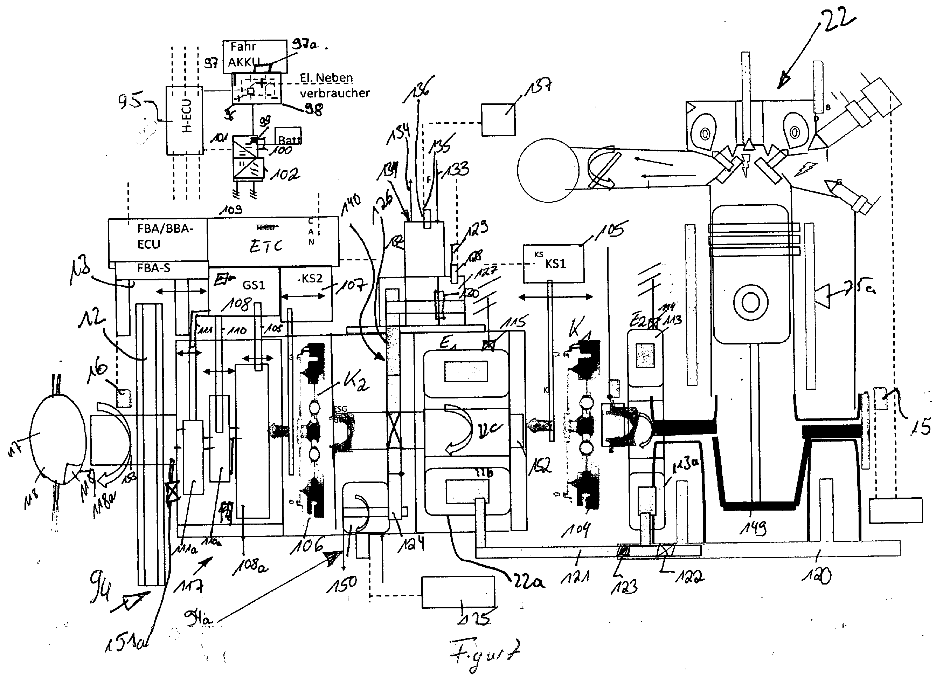

### Beschreibung der Figur 7

Figur 7 zeigt den Antrieb mit zwei in Serie geschalteten Kupplungen Die Verbrennungsmotorenkupplung K2 104 kann hydraulisch, elektrisch oder pneumatisch von einem Kupplungssteller KS1 105 betätigt werden um den Verbrennungsmotor 22 vom Elektromotor 22a zu trennen.
Der Elektromotor 22a besteht zumindest aus einem Rotor 22 c und einem Stator 22b. Dem Stator sind vorzugsweise die mehrphasigen Wicklungen zugeordnet. Der Stator ist vorzugsweise Flüssigkeitskgekühlt .
Optional kann ein zweiter Elektromotor 113 angeordnet sein, welcher den Verbrennungsmotor 22 zugeordnet ist und mit der Kurbelwelle in Verbindung steht bzw. von der Kurbelwelle angetrieben wird oder seine Antriebskraft an die Kurbelwelle abgibt. Zwischen der Kurbelwelle und dem Elektromotor 113 kann ein Maschinenelement z.B.: ein Zahnrad ketten oder Riementrieb angeordnet sein. Optional kann auch dieser Elektromotor 113 flüssigkeitsgekühlt sein.

Es ist eine weitere Kupplung-K2 106 der Seite der Getriebeabtriebswelle zugeordnet abgeordnet, welche den Achsantrieb bzw das Differential 117 vom Elektromotor trennt. Es ist ein Übersetzungsgetriebe 108a eingebaut welches von einem der Getriebesteller 108 in Abhängigkeit der elektrischen Signale zumindest einem der Vorwahlgeber 19, 20 und 21 und Fahrzeugbetriebsbedingungen gesteuert wird.
Desweiteren ist ein schaltbarer Vorgelegezahnradsatz 110a eingebaut dessen Einfluss auf die Getriebe Übersetzung mit dem Steller 110 beeinflußt werden kann. Weiterhin ist ein Rückwärtsgangzahnradsatz 111a eingebaut. Das Einlegen des Rückwärtsganges wird durch den Getriebesteller Rückwärtsgang GS3 beeinflusst bzw. realisiert.
Zumindest einer der Getriebesteller GS bzw. einer der Kupplungssteller KS Ist durch das Hybrid und /oder Getriebesteuergerät ETC ansteuerbar.
Die Kupplung K2 106 kann den Getriebebaugruppen 111a,110a, 108a vor oder nachgeschaltet sein. In jedem fall ist diese nicht zwischen den wegunabhängigen Nebenabtrieben für die brems und lenkungsunterstützungspumpen bzw. Kompressoren und dem Elektromotor E1 22c angeordnet. Eine Anordnung der Kupplung K2 zwischen dem Differential und den wegunabhängigen Nebenverauchern 150 ist denkbar. Ein wegabhängiger Nebenverbraucher ist ein Nebenverbraucher dessen Leistungsbedarf sich proportional zur Fahrgeschwindigkeit verhält. Zum Beispiel eine Kehrwalze oder ein Kehrmaschinengebläse das mit zunehmender Fahrgeschwindigkeit mit zunehmender Drehzahl bewegt wird.
Zumindest einer der wegabhängigen Nebenverbraucher z.B.: 151 a bzw. zumindest einer der wegunabhängigen Nebenverbraucher 150 127 131 , 132 kann durch eine zusätzliche öffen und schließbare Nebenabtriebskupplung vom Elektromotor E1 22a und damit vom Triebstrang zwischen der Getriebeeingangswelle bis zur Getriebeausgangswelle abtrennbar sein.
So kann zB die Ölpumpe zum Betätigen der Nebenabtriebskupplung welche dem wegabhängigen Nebenabtrieb einschaltet vom Elektromotor E1 22a wegunabhängig angetrieben werden, und damit der wegabhängig zu betreibende Nebenabtrieb eingeschaltet werden. Dies ist insbesonders elektromotorischen fahren eines Hybridfahrzeugs im Reinigungsbetrieb erforderlich. Insbesonders ist dies hier interessant da durch das auskuppeln der Kupplung K1 104 in diesem Betrieb der Verbrennungsmotor abgeschaltet werden kann womit ein emmisionsfreies kehren und fahren einer Tiefgarage möglich ist. Im Falle der Akkufüllstand so weit abgefallen ist dass ein Verbrennungsmotorstart durch einen oder beide Elektromotoren E1/E2 möglich ist, so wird der Fahrer optisch und/ oder akustisch benachrichtigt. Oder der Verbrennungsmotor wird automatisch gestartet um den Fahrbetrieb zu unterstützen.

Zusätzlich kann hier dann noch die Kombination mit einem Gasmotorbetrieb des Verbrennungsmotors interessant sein da dann in solchen räumen besonders wenig Emissionen anfallen.
Desweiteren ist es möglich dass zumindest die Lenkungs- und Bremsunterstützenden Nebenverbraucher wie Lenkhilfepumpe und oder Bremsdruckunterstützungseinheit 131 ( Kompressor 132 , Vakuumpumpe oder Öldruckpumpe zur Bremsunterstützung) direkt oder indirekt durch ein elektrisch betätigbares Ventil (125, 137) in dessen Leistungsaufnahme gesteuert wird. Ist dies der Fall, so ist es vorteilhaft für dieses betroffene Aggregat eine Nebenverbraucherkupplung entfallen zu lassen .
Desweiteren ist hier eine Bremsscheibe 12 an der Getriebeausgangswelle153 angeordnet sowie ein passender Bremssattel angeordnet welche von einem der elektrischen Steuergeräte gesteuert wird welches die vom Fahrer vorgegebenen Fahrbetriebsweisen berücksichtigt und oder den Fahrzeugzustand in irgendeiner Form miteinkalkuliert.
Das Dargestellte Differential 117 kann ein Mittendifferential (allradfahrzeug) oder ein Achsendifferential sein es ist vorzugsweise mit einer Differentialsperre ausgestattet.

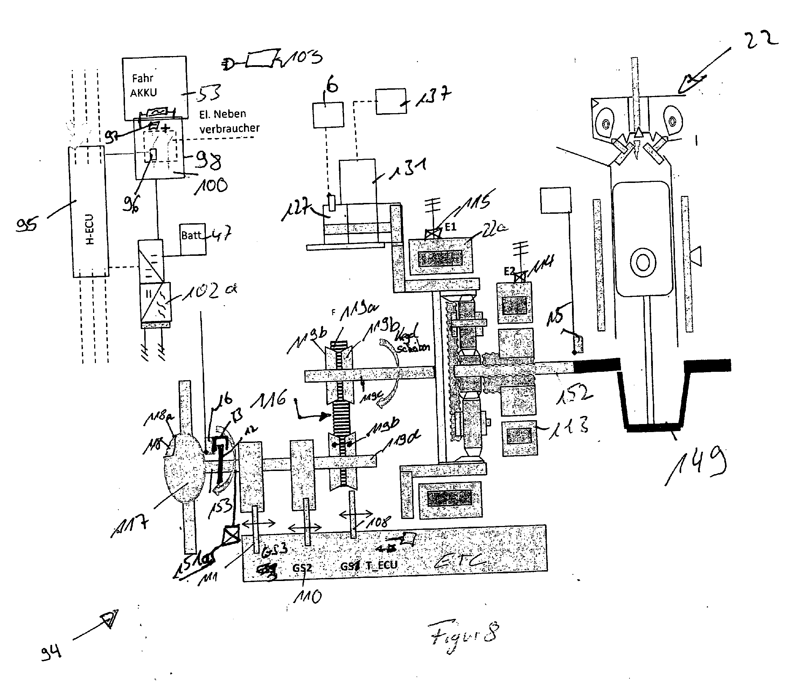

Beschreibung der Figur 8.

Figur 8 zeigt eine Anordnung mit einem stufenlos veränderbaren Übersetzungsgetriebe 116 Vorzugsweise ist eine kette als Übertragungsglied zwischen Getriebeeingangs und ausgangswelle angeordnet.
Der Getriebeausgangswelle ist hier ein wegabhängiger Nebenverbraucher 151 a zugeordnet also von ihr antreibbar.
Desweiteren ist hier vorteilhafterweise eine Lenkhilfepumpe 127 welche vom Elektromotor E1 angetrieben werden kann und vom Lenkungssteuergerät 6 gesteuert werden kann angebaut. Zudem ist eine Bremskraftunterstützungseinheit 131 welches eine Ölpumpe zur Bremskraftunterstützung, eine Vakuupumpe oder ein Druckluftkompressor zur Bremskraftunterstützung sein kann. Der Fahrakku 53 kann durch einen externen Laderegler 103 welcher vorteilhafterweise auch am Fahrzeug befestigt sein kann aufgeladen werden. Der Verbrennungsmotor 22 ist abstrakt dargestellt und kann mit Flüssigkraftstoff und /oder Gas entsprechen der vorangegangenen Ausführungen betrieben werden.
Der Getriebeausgangswelle 153 kann auch hier eine Bremsscheibe 12 und ein Bremssattel 13 zur Realisierung einer Feststellbremse gemäß einer vorangegangener Beschreibung zugordnet werden.

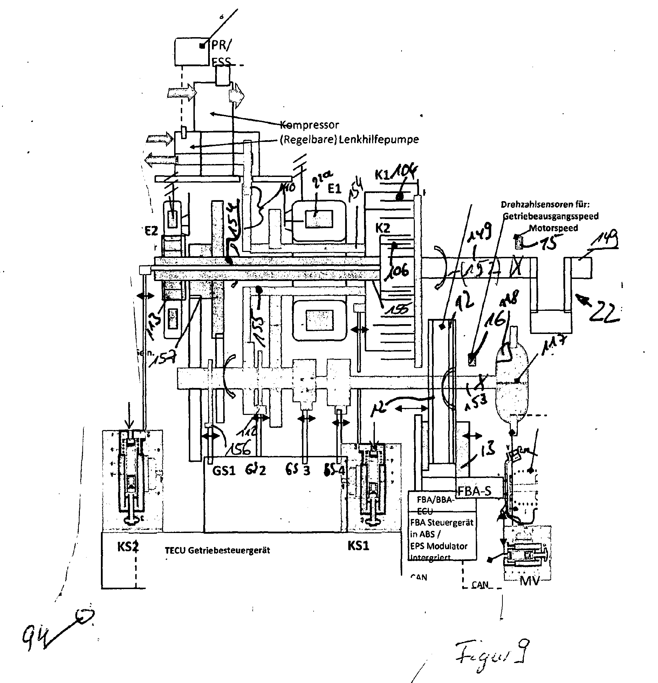

### Beschreibung der Figur 9

Figur 9 zeigt eine Ausführung des Antriebes in Kombination mit einem Doppelkupplungsgetriebe.

Hierbei sind die zwei Kupplungen K1 und K2 nicht seriell sondern parallel von der Kurbelwelle 149 mit den Kupplungsstellern KS1 und oder KS2 zu und/oder abschaltbar. Der Kupplung K2 106 ist die Schaltwelle1 154 zugeordnet, der Kupplung K1 104 ist die Schaltwelle2 155 zugeordnet.
Die Getriebeausgangswelle kann unter Verwendung von Synchonisierschalteinrichtungen 156 einer der Schaltwellen zugeordnet werden.
Die Getriebeeingangswelle wird bei einem solchen Getriebe durch die Kurbelwelle des Verbrennungsmotors dargestellt.

Bei einem solchen Getriebe ist es möglich den Gang drehmomentfrei auf der ausgekuppelten Welle zu wechseln z.B.: auf der Schaltwelle2 155 bei ausgekuppeltem K1 104 während das Fahrzeug über die geschlossene Kupplung K2 106 und die schaltwelle 1 154 angetrieben wird.
Diese Anordnung ermöglicht ein sehr schnelles und damit verlustarmes schalten, da der Triebstrang fast nicht unterbrochen wird.
Wird ein solches Doppelkupplungsgetriebe hybridisiert mit einem Elektromotor E1 und oder E2 so können die Elektromotoren welche auch als Generatoren zum laden von Fahrakku 53 und ober der batterie47 betrieben werden, vorzugsweise den Schaltwellen zugeordnet. Damit ist es möglich wir dargestellt bei geöffneter Kupplung K1 beide Drehmomente der elektrischen Maschinen mit unterschiedlichen Übersetzungsverhältnissen bezogen auf die Getriebausganbgswelle wirken zu lassen. Dies hat den Vorteil dass für den jeweiligen Betrieb der elekrischen Maschinen (Elektromotoren E1 und oder E2) die ideale Drehzahl herausgesucht werden kann um den Elektromotor oder Generator E1/E2 im idealen Kennfeldlaufen zu lassen. In diesem Betriebsmodi können alle drei Antriebsmotoren die Elektromotoren E1 E2 und der Verbrennungsmotor das Fahrzeug bewegen, wird k2 auch geöffnet so fährt das Fahrzeug rein elektrisch mit E1 und oder E2 und der Verbrennungsmotor 22 kann abgeschaltet werden.
Desweiteren kann z.B.; bei geöffneter KupplungK1 104 mit der elektrischen maschine E1 gefahren werden kann während über die geschlossene Kupplung K2 verbunden mit der Schaltwelle1 154 der Elektromotor E2 als Generator von der Kurbelwelle 149 vom Verbrennungsmotor angetrieben der Fahrakku 53 geladen wird.
Als weitere Anordnung kann hier zumindest einer der Elektromotoren E1 und oder E2 der Getriebeausgangswelle 153 und /oder der Kurbelwelle 149 zugeordnet werden.
Der Nebenabtrieb 124 oder 150 ist dann idealerweise im Faller er wegabhängig betrieben werden muss der Getriebeausgangswelle 153 zugeordnet. Im falle durch den nebenabtrieb immer mitlaufen muss kann er von zumindest einem der Elektromotoren E1 E2 über eine der Schaltwellen 154 bzw. 155 angetrieben werden.
Auch hier können die Nebenverbraucher durch zusätzliche Schalteinrichtungen(137bzw 6 )in der Leistungsaufnahme gesteuert werden, dies ist auch bei der Verbindung mit einem Doppelkupplungsbetrieb insbesonders während des Umschaltbetriebes hilfreich .

### Bezugszeichenliste

- 1.: Elektrisches Getriebesteuergerät (ETC)
1a Hybridfahrzeug
- 2.: ABS/EBS Steuergerät
- 3.: Stabilitätsregelung ESP
- 4.: Querbeschleinigungssensor
- 5.: Lenkwinkelsensor
- 6.: Lenkungssteuergerät
- 7.: Tachograph (Tacho)
7a Fahrzeuggeschwindigkeitsmesseingang
- 8.: Dämpfersteuerung (elektrisch)
- 9.: Gate Way Steuergerät
- 10.: Hybridantriebssteuergerät
10a Fahrzeugrad
- 11.: Radbremse
- 12.: Bremsscheibe 1- oder 2 - Scheibig mit und ohne Lüftungsschlitzen (optional axial verschiebbar)
- 13.: Bremssattel (optional axial verschiebbar)
- 14.: Raddrehzahlsensor
- 15.: Motordrehzahlsensor
- 16.: Getriebedrehzahlsensor
- 17.: Feststellbremse
17a Leitung
- 18.: Handbremsgeber HBG (3Stellungsgeber)
- 19.: Gangvorwahlgeber
- 20.: Betriebsvorwahlgeber
- 21.: Motorbremsgeber (Dauerbremse)
- 22.: Verbrennungsmotor
22a Elektromotor E1 (Generator)
22b Stator
22c Rotor
- 23: . Gaspedal
23a Gaspedalsignalausgang
24. Handgassteller
25. Kupplungspedal
26. Bremspedal
26a Bremssignalausgang
27. Rückschlagventil
28. ABS/EBS Bremsmodulator
28a Feststellbrems-Betriebsbremskombimodulator
29. Betriebsbremsmodulator
30. Anhängersteuerventil (Modul)
31. Kupplungskopf Anhängersteuerung
32. Kupplungskopf Anhängerdruckluftversorgung
33. Feststellbremsaktuator (Federspeicherzylinder)
34. Bremsscheibe
35. Infrarotsensor
36. Parkhilfesensor
37. Radarsensor
38. Ultraschallsensor
39. Lenkrad
40. Lenksäule
41. Kühlgasventileinrichtung
41a Steckereinrichtung
42. Flüssigkraftstofftank
43. Gasstecker
44. Gassteckerventil
45. Akkustecker
45a Schaltanschluss
46. Akkusteckersichung
47. Batterie (Niedervoltstromversorger)
47a Transportmittelträger
48. Aufbaudiagnoseinheit
48a Aufbaudiagnosestecker
49. Ladebordwand
49a Schalter
49b Hydraulikpumpe
49c Elektromotor
49d Gestänge
50. Serieller Datenaustausch CAN/LIN (Datenaustausch)
50a Luftfederungssteuereinheit
51. Gastank
52. Zusatzgastank
53. Fahzeugakku
54. Aufbauakku
55. Kühlanlage
- 56.: Klimaanlage
56a Klimaanlagensteuerung
- 57.: EEC Verbrennungsmotorsteuergerät
- 58.: Flüssigkraftstoffeinspritzventil
58a Kombieinspritzventil
- 59.: Rail Flüssigkraftstoffversorgung (entfällt bei Pumpe düse dort muss der Pumpennocken abgeschaltet werden oder ein Rücklaufbypassleitung geöffnet werden bei Gasbetrieb)
59a SCR Regeleinrichtung
59b Partikelfilternachbrenner
- 60.: Luftmassenmesser
60a Saugrohrdrucksensor
- 61.: Ansaugluftfilter
61a Drosselklappe
- 62.: Drosselklappenpotentiometer
- 63.: Drosselklappensteller
64a Regelklappe
64b Regelklappensteller
- 64.: Saugluftkompressor
- 65.: Nockenwellengeber
65a Nockenwellen
65b Nocken
- 66.: Nockenwellenversteller (Nocken Hub und oder Drehwinkel)
- 67.: Mini-Turbodaderverdichter
- 68.: Haupturboladrverdichter
- 69.: Waste Gate Ventil
- 70.: Miniturboladerturbine
- 71.: Hauptturboladerturbine
71 a Waste Gate Ventil
- 72.: Abgasrückfürventil (AGR)
- 73.: Ladeluftkühler
- 74.: Lambdasonde
- 75.: Abgastemperatursonde
75a Motortemperatursensor
- 76.: NOx Sonde
- 77.: Hauptkatalysator
- 78.: Nebenkatatysator
- 79.: Rußfilter
- 80.: Rußfilterreinigungsanlage
- 81.: Gaseinspritzventil (elektrisch)
81a Venturigasleitung
81b Gasmengenregler
- 82.: Gaseinspritzdüse
- 83.: Gasrail
- 83.: xGasmotorsteuergerät (GMS)
- 85.: Gasdruckregler
- 86.: Druckreglerheitzung
- 87.: Gastemperatursensor
- 88.: Gasdrucksensor
- 89.: Einfüllstutzen für Erdgas und Flüssigkraftstoff
- 90.: Kombi-Energiefüllstandsanzeige
- 90a: Gastank
- 91.: Erdgastankabsperrventil
- 92.: Zündkerze
- 93.: Glühkerze
- 94: Antrieb
94a Hybridgetriebe
- 95: Hybridsteuergerät
- 96: Akkustromsensor
- 97: Akkuspannungssensor
97a Akkusicherung
- 98: Akkuabschaltrelais
- 99: Batteriestromsensor
99a Batterie
- 100: Batterieabschaltrelais
- 101: Gleichspannungswandler
- 102: Wechselrichter
102a Leistungshalbleiter (Thyristor,Transistor, Feldeffekttrasistor)
- 103: Externer Laderegler
- 104: Verbrennungsmotorenkupplung K1
- 105: K1 Kupplungssteller KS1
- 106: Getriebekupplung K2 (dem Abtrieb/Differential zugeordnet)
- 107: K2 Kupplungssteller KS2
- 108: Getriebesteller GS1 Übersetzungsauswahl
108a Übersetzungsgetriebe
- 109: Wegsensor für Getriebesteller
- 110: Getriebesteller Vorgelegegruppe GS2
110a Vorgelegezahnradsatz
- 111: Getriebesteller Rückwärtsgang GS3
111a Rückwärtsgangzahnradsatz
- 112: Synchronschalteinrichtung
- 113: Elektromotor/Generator E2
- 114: E2 Motorstrom und Temperatursensor
114a Elektromotorenanschlusskabel
- 115: E1 Motorstrom und Temperatursensor
115a Elektromotorenanschlusskabel
- 116: Übersetzungsgetriebe
- 117: Differential
- 118: Differentialsperre
118a Differentialsperrenbetätigungsleitung
- 119: PIV-Getriebe
119a Kette
119b,119d Kegelscheiben
- 120: Motorkühlkreislauf
- 121: Hybridgetriebekühlkreislauf
- 122: Thermostat
- 123: Temperatursensor
- 124: Nebenabtrieb
- 125: Nebenabtriebsregeleinrichtung
- 126: Nebenabtriebskupplung
126a Synchronisationsschalteinrichtung
- 127: Lenkhilfepumpe
- 128: Lenkhilfepumpenregelventil
- 129: Lenkhilfepumpenbeeinflussungsventil
- 130: Lenkhilfepumpenkupplung (optional/ kann auch als Synchronisationsschalteinrichtung realisiert sein
- 131: Bremskraftunterstützungseinheit
- 132: Druckluftkompressor
- 133: Ansaugstutzen
- 134: Druckstutzen
- 135: Ventilsteueranschluss
- 136: Ventilsteuereinrichtung
- 137: Kompressorregeleinrichtung
- 138: Druckluftkompressorverdichtungsraum
- 139: Druckluftkompressorverdichtungswand
- 140: Mechanischer Antrieb (Zahnrad oder Riemen oder Kette) für Kompressor oder Lenkhilfepumpe
- 141: Ablassventil mit Überdruckventil
- 142: Trockner und Filter
- 143: Filterregenerationseinrichtung
- 144: Systemdrucksensor
- 145: Systemrückschlagventil
- 146: Druckbergrenzereinrichtung
- 147: Sperrventil für die Feststellbremsanlage
- 148: Druckbehälter
- 149: Kurbelwelle
- 150: Nebenverbraucher
150a Kühlmittelpumpe
150b Steuerleitung
- 151: Getriebeschmierpumpe
151a wegabhängiger Nebenverbraucher
- 152: Getriebeeingangswelle
- 153: Getriebeausgangswelle
- 154: Schaltwelle 1
- 155: Schaltwelle 2
- 156: Synchronisierungseinrichtung
- 157: Zahnradpaar

## Patentansprüche

1. Hauptanspruch:
Antrieb 94 für ein Hybridfahrzeug 1a, bestehend aus;
- einem Verbrennungsmotor 22
- einem Elektromotor E1, 22a
- einem Elektromotorsteuergerät 50 mit einer elektrischen Datenverbindung zum Elektromotorstromsensor 115
- einem Verbrennungsmotorsteuergerät 57
- einem Tachographen 7 zum Erfassen der momentanen Fahrzeuggeschwindigkeit
- einem Fahrakku 53
- einem Rückwärtsgangzahnradsatz 111a
- zumindest einem Übersetzungszahnradsatz 108a
- einem mit dem Elektromotor E1 22a gekoppelten Nebenabtrieb 124
**dadurch gekennzeichnet, dass** das Fahrzeug bei abgeschaltetem, stehendem Verbrennungsmotor 22 mit dem Elektromotor E1- 22a gefahren werden kann, und dieser Elektromotor E1- 22a zusätzlich in der Lage ist zumindest einen Nebenverbraucher 150 mechanisch verbunden anzutreiben.

2. Antrieb 94 nach Anspruch 1 **dadurch gekennzeichnet, dass** zwischen dem Elektromotor E1 22a und dem Nebenabtrieb 150a ein Übersetzungsgetriebe 108a mit einer veränderlicher Übersetzung zum Elektromotor E1 angeordnet ist.

3. Antrieb 94 nach Anspruch 1 **dadurch gekennzeichnet, dass** der Nebenabtrieb 150 mit einem konstantem Übersetzungsverhältnis vom Elektromotor E1 - 22a antrieben wird.

4. Antrieb 94 nach Anspruch 1 **dadurch gekennzeichnet, dass** mehrere Nebenabtriebe 150 und /oder 150a vom Elektromotor E1 - 22a antrieben werden.

5. Verfahren **dadurch gekennzeichnet, dass** der Verbrennungsmotor 22 bei Überschreiten der in einem der Steuergeräte (1/2/31617/8/9/10/57) gespeicherten maximal zulässigen Elektromotorenbelastung (Motorstrom) automatisch gestartet wird.

6. Verfahren **dadurch gekennzeichnet, dass** die Motorbelastung (Motorstrom) über eine Zeitspanne t1 über diesem zulässigen Motorstrom liegt.

7. Verfahren **dadurch gekennzeichnet, dass** der Elektromotor E1- 22a auch als Generator betrieben werden kann und dessen elektrische Energie dem Fahrzeugakku 53 zugeführt wird.

8. Antrieb 94 nach einem der vorhergehenden Ansprüche **dadurch gekennzeichnet, dass** die Leistungsaufnahme des Nebenverbrauchers durch eine ihm zugeordnete Nebenabtriebsregeleinrichtung 125/128/129 reduziert und/ oder geregelt werden kann.

9. Hybridgetriebe 94a **dadurch gekennzeichnet das** das Hybridgetriebe als Baugruppe mit einer Eingangswelle 152 und einer Ausgangswelle 153 und einem Nebenverbraucherabtrieb 150a, **dadurch gekennzeichnet, dass** ein mit der Baugruppe verbundener Elektromotor E1 - 22a den Nebenverbraucherabtrieb durch eine mechanische Verbindung antreiben kann.

10. Hybridgetriebe 94a **dadurch gekennzeichnet, dass** das Übersetzungsgetriebe einen stufenlos veränderbaren Übersetzungsbereich ermöglicht.

11. Hybridgetriebe 94a **dadurch gekennzeichnet, dass** das Übersetzungsgetriebe die stufenlos veränderbare Übersetzung mit einer Kette 119a und zwei in deren axialen Abstand zueinander verschiebbaren Kegelscheiben 119b auf zwei achsparallelen Wellen 119c und119d realisiert wird.

12. Hybridgetriebe 94a **dadurch gekennzeichnet, dass** zumindest ein Wälzkörper auf zwei parallel laufenden Stahlscheiben verschoben wird um das Übersetzungsverhältnis stufenlos zu verändern.

13. Hybridgetriebe 94a **dadurch gekennzeichnet, dass** der Nebenverbraucher (150/1271132)durch eine zusätzliche schaltbare Kupplung 126 vom Elektromotor E1 22a abschaltbar ist.

14. Hybridgetriebe 94a **dadurch gekennzeichnet, dass** das Übersetzungsgetriebe 116 auf der Basis eines Doppelkupplungsgetriebes mit zwei schaltbaren Mehrscheibenkupplungen aufgebaut ist wobei das Doppelkupplungsgetriebe eine dem Differential 117 in Verbindung stehende Ausgangswelle 153 hat.

15. Hybridgetriebe 94a **dadurch gekennzeichnet , dass** beide Kupplungen des Doppelkupplungsgetriebes von der Kurbelwelle des Verbrennungsmotors angetrieben werden.

16. Hybridgetriebe 94a **dadurch gekennzeichnet, dass** jede der zwei Kupplungen einer separaten Antriebswelle zugeordnet ist und der Trennzeitpunkt zumindest einer der Kupplungen von einem elektronischen Steuergerät ETC gesteuert wird.

17. Hybridgetriebe 94a **dadurch gekennzeichnet, dass** das zumindest einer der Schaltwellen des Doppelkupplungsgetriebes ein Elektromotor E1 22a

18. Hybridgetriebe 94a **dadurch gekennzeichnet, dass** das Übersetzungsgetriebe auf der Basis eines Schaltgetriebes mit einer schaltbaren Kupplung K1 zwischen dem Elektromotor E1 und dem Verbrennungsmotor 22 aufgebaut ist. zugeordnet ist

19. Hybridgetriebe 94a **dadurch gekennzeichnet, dass** der Nebenverbraucher (150/127/132)durch eine zusätzliche schaltbare Kupplung 126 vom Elektromotor E1 22a abschaltbar ist.

20. Hybridgetriebe 94a **dadurch gekennzeichnet, dass** nach einem der vorangegangenen Ansprüche **dadurch gekennzeichnet, dass** der neben Verbraucher durch eine schaltbare Mehrscheibenkupplung vom Elektromotor E1 trennbar schaltbar ist.

21. Hybridgetriebe 94a **dadurch gekennzeichnet, dass** der Nebenverbraucher (150 127132) über eine Synchronschalteinrichtung 126a vom Elektromotor E1 22a zuschaltbar bzw. abschaltbar ist.

22. Hybridgetriebe 94a **dadurch gekennzeichnet, , dass** der Nebenverbraucher 150 ,127, 132 durch einen Zahnrad 124 vom Elektromotor E1 -22a angetrieben wird.

23. Hybridgetriebe 94a nach einem der vorangegangenen Ansprüche **dadurch gekennzeichnet, dass** der Nebenverbraucher 150 127 132 durch einen Kettentrieb 124 vom Elektromotor E1 22a angetrieben wird.

24. Hybridgetriebe 94a nach einem der vorangegangenen Ansprüche **dadurch gekennzeichnet, , dass** der Nebenverbraucher von einem Riementrieb vom Elektromotor E1 angetrieben wird.

25. Hybridgetriebe 94a nach einem der vorangegangenen Ansprüche **dadurch gekennzeichnet, dass** der Nebenverbraucher eine hydraulische Lenkhilfepumpe ist.

26. Hybridgetriebe 94a nach einem der vorangegangenen Ansprüche **dadurch gekennzeichnet, dass** der Nebenverbraucher eine Vacuumpumpe zur Bremskraftunterstützung ist.

27. Hybridgetriebe 94a nach einem der vorangegangenen Ansprüche **dadurch gekennzeichnet, dass** der Nebenverbraucher ein Druckluftkompressor ist.

28. Hybridgetriebe 94a nach einem der vorangegangenen Ansprüche **dadurch gekennzeichnet, dass** der Nebenverbraucher ein Klimakompressor ist.

29. Hybridgetriebe 94a nach einem der vorangegangenen Ansprüche **dadurch gekennzeichnet, dass** der Nebenverbraucher ein elektrischer Zusatzgenerator ist.

30. Hybridgetriebe 94a nach einem der vorangegangenen Ansprüche **dadurch gekennzeichnet, dass** der Nebenverbraucher eine Wasserpumpe ist.

31. Hybridgetriebe 94a nach einem der vorangegangenen Ansprüche **dadurch gekennzeichnet, dass** der Nebenverbraucher eine Kühlwasserpumpe ist.

32. Hybridgetriebe 94a nach einem der vorangegangenen Ansprüche **dadurch gekennzeichnet, , dass** der Nebenverbraucher eine Hydraulikpumpe ist.

33. Hybridgetriebe 94a nach einem der vorangegangenen Ansprüche **dadurch gekennzeichnet, , dass** der Nebenverbraucher eine Seilwinde ist.

34. Antrieb 94 nach einem der vorangegangenen Ansprüche **dadurch gekennzeichnet, , dass** die Nebenverbraucher 150, 127,132 in Ihrer Leistung zusätzlich durch eine Nebenabtriebsregeleinrichtung 125 steuerbar sind
